(19) Europäisches Patentamt / European Patent Office / Office européen des brevets

(11) EP 1 855 082 A1

(12) EUROPEAN PATENT APPLICATION

(43) Date of publication:
**14.11.2007 Bulletin 2007/46**

(21) Application number: **07108009.7**

(22) Date of filing: **11.05.2007**

(51) Int Cl.:
***G01B 11/02*** (2006.01) ***G01B 11/30*** (2006.01)
***G01B 11/06*** (2006.01) ***G02B 21/00*** (2006.01)

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **12.05.2006 US 383089**

(71) Applicant: **Voith Patent GmbH**
**89522 Heidenheim (DE)**

(72) Inventors:
- **Typpo, Pekka**
  **Cupertino, CA 95014 (US)**
- **Chase, Lee**
  **Los Gatos, CA 95032 (US)**

# (54) Device and method for optical distance measurement

(57) Device and process for determining a distance to an object. The device includes at least one lens arranged to focus light from a source onto the object and to collect light reflected and scattered from the object. An apertured element includes a circular aperture structured and arranged to form a circular light beam from the reflected and scattered light, and a detector system is structured and arranged to receive the circular light beam. The detector system is sensitive to light beam diameter. Further, a determining device is structured and arranged to determine a distance to the object based upon signals from the detector system.

FIG. 1

ANALYZER
19
DETECTOR SYSTEM
18
P2
P1
P3
17
13'
13
14
15
15
15'
11
12
S
16
W2
W1
W3
W



Printed by Jouve, 75001 PARIS (FR)

## Description

BACKGROUND OF THE INVENTION

1. Field of the Invention

The invention relates to an optical distance measuring device and process in a web production machine, e.g., a paper or board machine, for measuring a parameter of the web, e.g., web thickness, surface roughness, etc

2. Discussion of Background Information

Known optical distance measurement in the micrometer range is generally based on either laser triangulation or confocal principle. Laser triangulation is accomplished by a device projecting a small spot of light onto a surface. A lens having an optical axis oriented at an angle to the axis of the projected light forms an image of the spot onto a position sensitive detector. As the surface moves closer or farther from the device, the image of the spot moves, such that the output of the position sensitive detector is used to determine the distance from the device to the surface.

In accordance with the confocal principle, a confocal sensor light from a source, typically a laser, passes through a beam splitting mirror and is focused onto an object through a lens. Light scattered back from the object returns through the same lens, is separated from the source beam by the beam splitting mirror and is focused onto a pinhole. A detector behind the pinhole collects light that passes through it.

When the object is at exactly the focal point of the lens system, the image of the laser spot is tightly focused on the pinhole and the detector collects the maximum possible light. When the object moves away from the focal point, the image of the laser spot at the pinhole spreads out, such that less light passes through the pinhole to the detector.

Distance is measured by moving the pinhole and finding the distance at which the maximum amount of light penetrates the pinhole. Alternative methods for measuring distance are also known, e.g., as described in U.S. Patent Application No. __________________ (Attorney Docket No. HPX 12238 US), the disclosure of which is expressly incorporated by reference herein in their entirety.

However, one difficulty that arises with optical devices using the intense coherent light from a laser diode is that even small amounts of stray light reflected and/or scattered from the source can interfere with the measurement of the relatively small amount of light backscattered from the object being measured. Of particular difficulty are reflections from optical surfaces such as windows, beam splitters and lenses because the reflected light often follows the same path as the light to be measured. While anti-reflection coatings reduce reflected light to a fraction of a percent, with an intense source even this fraction is sufficient to cause problems. The above-noted conventional confocal microscope mitigates the effect of stray light to some extent by using a tiny pinhole at the focal point of the collecting lens. However, reflected light traveling the same path as the light being measured is allowed through the pinhole into the detector and can interfere with the measurement.

It is likewise known to utilize an optical device to observe surface topography at high speed (several MHz) in order to measure roughness. In the paper industry, surface roughness is a parameter relating directly to print quality. High quality printing grades go through coating and calendering steps to improve roughness and therefore print quality.

Further, the thickness (caliper) of a sheet can be measured with two (2) optical devices located on opposite sides of the sheet and separated by a known distance. If the distance between the optical devices is not constant, it can be measured with an inductive device that is not sensitive to the presence of the sheet. Thickness is calculated by subtracting the measured distances from the two optical devices to respective surfaces of the sheet from the distance between the optical devices.

SUMMARY OF THE INVENTION

The present invention provides a device and process for the optical measurement of the distance to the paper surface. Moreover, the distance measurement can have a repeatability that is better than 0.25 micrometers.

The invention produces an optical distance sensor fast enough to measure small scale surface topography of the sheet in a high speed paper machine for surface roughness measurement. The sensor therefore requires a response speed in the megahertz range.

The present invention can be utilized for the measurement of paper surface roughness. However, the uses for the instant invention are not limited to the examples described herein, and other uses utilizing the features of the invention are contemplated.

The present invention is directed to a device for determining a distance to an object. The device includes at least one lens arranged to focus light from a source onto the object and to collect light reflected and scattered from the object, an apertured element having a circular aperture structured and arranged to form a circular light beam from the reflected and scattered light, and a detector system structured and arranged to receive the circular light beam. The detector system is sensitive to light beam diameter. Further, a determining device is structured and arranged to determine a distance to the object based upon signals from the detector system.

According to a feature of the invention, the apertured element can have an annular aperture structured and arranged to form an annular light beam from the reflected and scattered light, and the determining device may be structured and arranged to receive the annular light beam, wherein the detector system is sensitive to light beam diameter.

In accordance with another feature of the present invention, the at least one lens can be structured and arranged to collimate the source light to a narrow central beam.

According to still another feature of the instant invention, the at least one lens can include an aspheric lens structured and arranged to focus the source light onto the object. Moreover, the at least one lens can include a plano-convex lens structured and arranged to focus the source light onto the object.

The device may also include an element arranged in a path of the cylindrical light beam to allow only the cylindrical beam to pass and to block other light.

Further, according to the invention, the object is a moving object and the analyzer measures the distance to the object by receiving a high frequency component of the detector system signals to measure an amount of light with high frequency variations reflected and scattered from a surface of the object and passing the annular aperture and directed to the detector system, and analyzing high frequency signals to determine the distance to the surface of a moving object.

In accordance with another feature, the distance determination in the analyzer may be a measure of surface profile.

The at least one lens can include at least one lens arrangement positioned on each side of the object, and the analyzer may be further structured and arranged to determine the caliper of the object. A separation between the lens arrangements can be known, and the caliper can be determined in the analyzer by determining the distance to the object from each lens arrangement, and subtracting a sum of the determined distances from a separation of the lens arrangements. The object can be s a moving web.

The device can also include a wedge-shaped ring prism having a hole with a diameter corresponding to the diameter of the cylindrical light beam. The ring prism can be positioned upstream of the detector system relative to the optical direction so light falling inside the diameter of the hole is directed in one direction while light falling outside the diameter of the hole is bent by the prism in another direction. The detector system may include at least two detectors arranged to receive the light directed in the one direction and to receive the light bent in the another direction. Moreover, another wedge-shaped prism can be arranged in the hole of the wedge-shaped ring prism. The wedge-shaped prisms can be arranged upstream of the detector system relative to the optical direction so that light falling inside the diameter of the hole is bent by the inside prism in one direction while light falling outside the diameter of the hole is bent by the outside prism in another direction.

According to a further feature, the invention can include a flat window with a hole and a lens arranged in the hole, so that light falling inside the diameter of the hole is focused by the lens in one direction, and a mirror arranged downstream of the flat window and lens to direct light falling outside the diameter of the hole, which passes through the flat window, in another direction.

In accordance with a still further feature, the invention can include a beam splitter arranged to split the cylindrical light, a second apertured element having an annular aperture having an inner diameter corresponding to the diameter of the cylindrical light, and a third apertured element having an annular aperture having an outer diameter corresponding to the diameter of the cylindrical light. A first split portion of the split cylindrical light may be directed through the second apertured element so that an increasing amount of light will pass to a detector of the detector system as the cylindrical beam diameter increases, and a second split portion of the split cylindrical light may be directed through the third apertured element so that an increasing amount of light will pass to another detector of the detector system as the cylindrical beam diameter decreases.

According to another feature of the instant invention, the detector can include concentric detectors. Further, the detector may include a detector array or the detector can include an imaging array. The light source may include a laser diode.

The present invention is directed to a process for determining a distance to an object. The process includes focusing light from a source onto the object and collecting light reflected and scattered from the object through a same at least one lens, forming a cylindrical light beam from the reflected and scattered light;

monitoring the diameter of the cylindrical light beam, and determining a distance to the object based upon signals related to the monitored diameter of the cylindrical light beam.

In accordance with a feature of the invention, the process can further include collimating the source light to a narrow central beam.

According to a further feature, the process can include allowing the cylindrical light beam to pass while blocking other light.

Moreover, the determining of the distance may include receiving a high frequency component of the detector system signals to measure an amount of light with high frequency variations reflected and scattered from a surface of the object and passing the annular aperture and directed to the detector system, and analyzing high frequency signals to determine the distance to the surface of a moving object.

The process can also include measuring a surface profile of the object.

Further, the process may also include determining the caliper of the object. A separation between the lens arrangements can be known, and the determining the caliper may include determining the distance to the object from each lens arrangement, and subtracting a sum of the determined distances from a separation of the lens arrangements. The object may be a moving web.

The process can further include directing the cylindrical light beam through a wedge-shaped ring prism having a hole with a diameter corresponding to the diameter of the cylindrical light beam, directing light falling inside the diameter of the hole in one direction, and bending light falling outside the diameter of the hole in another direction.

According to still another feature of the invention, the process can include directing the cylindrical light beam through a wedge-shaped ring prism having a hole with a diameter corresponding to the diameter of the cylindrical light beam with another wedge-shaped prism arranged in the hole, bending light falling inside the diameter of the hole in one direction, and bending light falling outside the diameter of the hole in another direction.

According to another feature, the process may include directing the cylindrical light beam through a flat window with a hole and a lens arranged in the hole, focusing light falling inside the diameter of the hole in one direction, and directing light falling outside the diameter of the hole, which passes through the flat window, in another direction.

In accordance with still yet another feature of the present invention, the process can include splitting the cylindrical light, directing a first split portion of the split cylindrical light through the second apertured element so that an increasing amount of light will pass to a detector of the detector system as the cylindrical beam diameter increases, and directing a second split portion of the split cylindrical light through the third apertured element so that an increasing amount of light will pass to another detector of the detector system as the cylindrical beam diameter decreases.

Other exemplary embodiments and advantages of the present invention may be ascertained by reviewing the present disclosure and the accompanying drawing.

## BRIEF DESCRIPTION OF THE DRAWINGS

The present invention is further described in the detailed description which follows, in reference to the noted plurality of drawings by way of nonlimiting examples of exemplary embodiments of the present invention, in which like reference numerals represent similar parts throughout the several views of the drawings, and wherein:

Figure 1 diagrammatically illustrates a device combining features of a confocal sensor with features of laser triangulation in accordance with the present invention;

Figure 2 diagrammatically illustrates an alternative embodiment of the invention depicted in Figure 1;

Figure 3 diagrammatically illustrates an alternative to the embodiment depicted in Figure 2;

Figure 4 diagrammatically illustrates another alternative to the embodiment depicted in Figure 2;

Figure 5 diagrammatically illustrates an alternative to the embodiment depicted in Figure 4;

Figure 6 diagrammatically illustrates an alternative embodiment of the invention depicted in Figure 1; and

Figure 7 diagrammatically illustrates another alternative embodiment of present invention depicted in Figure 1.

## DETAILED DESCRIPTION OF THE PRESENT INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the several forms of the present invention may be embodied in practice.

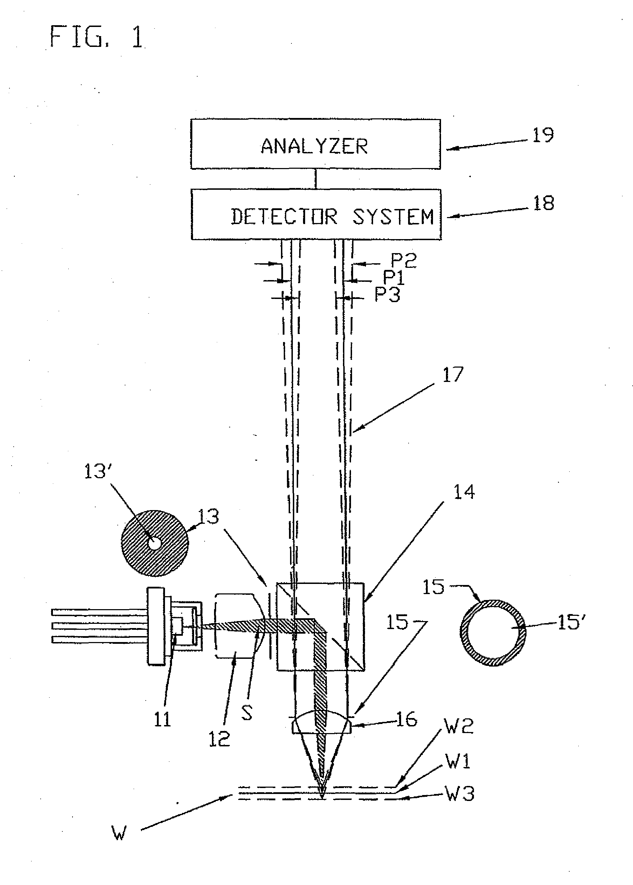

The present invention combines features of a confocal sensor with features of laser triangulation. As shown in Figure 1, a light source 11, e.g., a laser or diode laser, generates a source beam S directed through a lens or lens system 12 through a first apertured element 13 with an aperture 13' having an opening diameter of, e.g., 1 mm. However, it is noted that the size of aperture 13' can be as large as the diameter of the lens 12, in which case the first apertured element 13 can be dispensed with and lens 12 can act as the aperture. Source beam S is deflected 90° by beam splitter 14 through a focusing lens 16 to direct a small spot of light onto the surface of a sheet or web W, e.g., paper or board. A small 45° mirror can be used in place of the beam splitter 14. Focusing lens 16 may be either a small plano-convex lens or an aspheric lens. A multielement lens system similar to microscope objectives can also be used. Source beam S is normally narrow to allow the source spot on sheet W to remain small even when the distance to sheet W varies. However, if the measuring range is limited, source beam S can be as large as the opening of lens 16.

Some of the small spot of light incident upon sheet W is reflected and scattered back through lens 16, which forms a circular light beam passing through an aperture 15' of apertured element 15. When sheet W is positioned exactly at the focus of the lens or lens system, i.e., at W1, the circular light beam 17 will follow a cylindrical path P1 parallel to the optical axis. Moreover, as shown in Figure 1, when the object (sheet W) distance changes, circular light beam 17 will either diverge or converge, depending on the direction of the change. For example, when sheet W moves to the position W2 closer to lens 16, circular light beam 17 will diverge along path P2, and when sheet W moves to the position W3 farther from lens 16, circular light beam 17 will converge along path P3. Aperture 15 is used to select a suitable area of lens 16. However, with an appropriately chosen lens, it is possible to dispense with aperture 15 and instead use the entire lens area.

Thus, when viewed parallel to the optical axis, the circular image of light 17 has a diameter that either grows or shrinks depending on the object distance. A detector system 18, capable of detecting the size of the image, is placed at a suitable distance from the objective lens system. The distance determines the optical magnification and thus the sensitivity of the sensor since the diameter of the image grows or shrinks more as the distance from the objective lens increases. An analyzer 19 is coupled to detector system 18 to receive and analyze detector signals in order to determine the distance to the object or web. The operation of the analyzer will be more fully discussed below.

With the conventional confocal principle, the return light focuses onto a tiny pinhole, which must be precisely aligned with the image in order to accurately measure the return light intensity. For example, a 25 micrometer misalignment could result in no light reaching the detector. In contrast, the present invention collimates the return light from the object (sheet W) to a parallel circular light beam 17 with a larger diameter. Alignment is comparatively less critical since the circular beam is much larger, about 3 mm, and a 25 micrometer misalignment is negligible.

Detector system 18 can be formed by any of several possible detector arrangements capable of detecting the image diameter. While an imaging sensor such as a CCD or CMOS array may be an obvious choice, these devices are too slow for the application intended by the present invention. Thus, to achieve high speed measurement, the present invention employs a plurality of detectors, preferably just two detectors, in which one detector is arranged to collect all the light that falls outside a nominal image diameter and another collects all the light that falls inside the nominal image diameter. The sensors operate in a differential manner for changes in image diameter, such that as light in one detector increases, light in the other detector decreases.

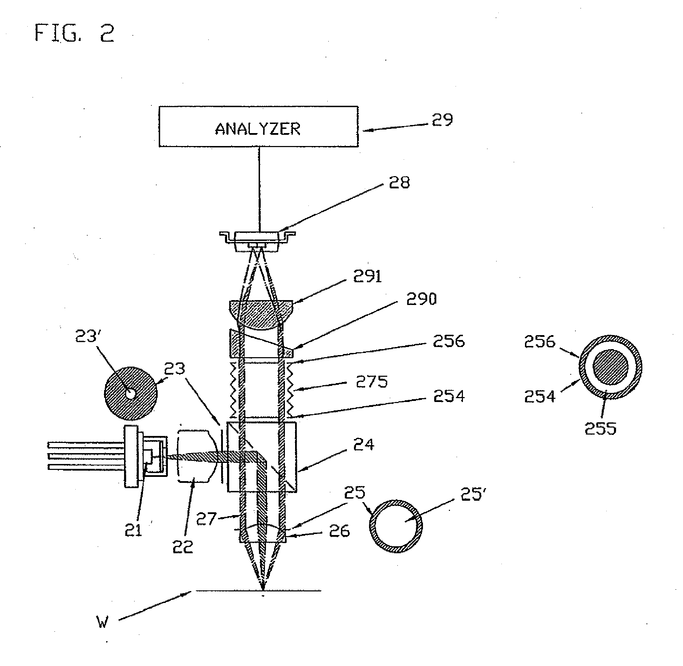

In an exemplary embodiment shown in Figure 2, a light source 21, e.g., a laser diode because of its small size and high intensity, produces a light beam directed through a condenser lens 22, which collects the light beam to form a parallel beam. Alternatively, other light sources can equally be used, e.g., an incandescent bulb with a pinhole aperture. A first apertured element 23 with an aperture 23' having a diameter of, e.g., 1 mm, produces or forms a narrow beam incident on beam splitter 24, e.g., a 45° angle beam splitter, to deflect the beam 90°. Of course other angles can be chosen as well. Half the light beam incident upon beam splitter 24 is reflected and directed through second aperture 25' of apertured element 25, through an objective lens 26, and focused onto object surface W at normal incidence. The other half of the laser beam that continues straight through beam splitter 24 is collected in a light trap and not utilized. Preferably, for increased efficiency, beam splitter 24 can be replaced by a small diameter mirror that reflects 100% of the laser beam but does not interfere with returning light.

Light reflected and scattered from the object surface W is collected by objective lens 26 and collimated toward aperture 25', which may have an opening width of, e.g., 3 mm. Cylindrical beam 27 thus formed goes through beam splitter 24 (or around the small diameter mirror) to ring prism 290. Ring prism 290 can be formed as a wedge prism with a hole in the middle, in which the hole diameter is the nominal image diameter, e.g., 3 mm. Accordingly, light falling outside the nominal image diameter is bent by prism 290 and light inside the nominal image diameter goes straight through the hole. A lens 291 placed after ring prism 290 focuses the light passing through the hole of ring prism 290 to a spot on the optical axis, while the light passing through ring prism 290 focuses to a spot offset from the optical axis. A detector 28, which can be formed by two separate detectors placed at the focus spots, measures the light intensity falling inside and outside the nominal image diameter. An analyzer 29, the specifics of which are more fully discussed below, is coupled to detector system 28 to receive and analyze signals from the separate detectors in order to determine the distance to the object or web.

Because a laser diode is so intense, even a small fraction scattered into detector 28 could be significant. Thus, to improve the performance of the exemplary embodiment, a third apertured element 254 and a fourth apertured element 256, which have annular openings 255 can be placed between beam splitter 24 (or mirror) and ring prism 29. Annular openings 255, which can have opening widths of, e.g., 0.5 mm in apertured elements 254 and 256, allow only the desired cylindrical beam to pass and block any stray light. Further, a spacer 275 can be positioned between apertured elements 254 and 256 to separate these elements by a distance of, e.g., 6 mm, and spacer 275 can be provided with serrated sides to reflect light back towards the source. Such a formed light trap effectively isolates light source 21 from detector 28.

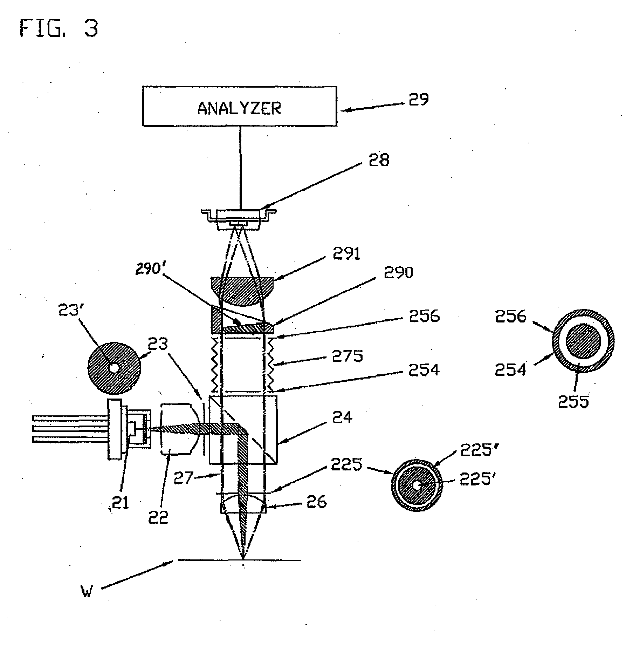

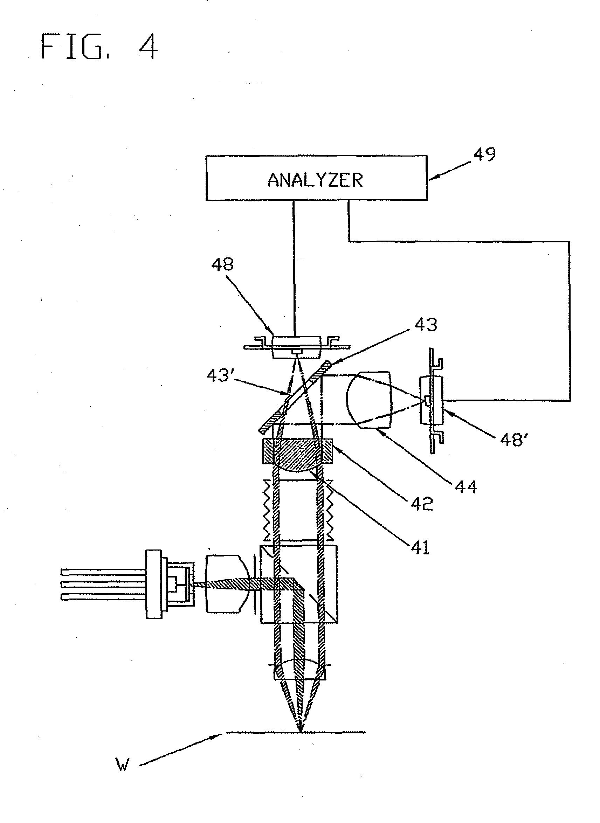

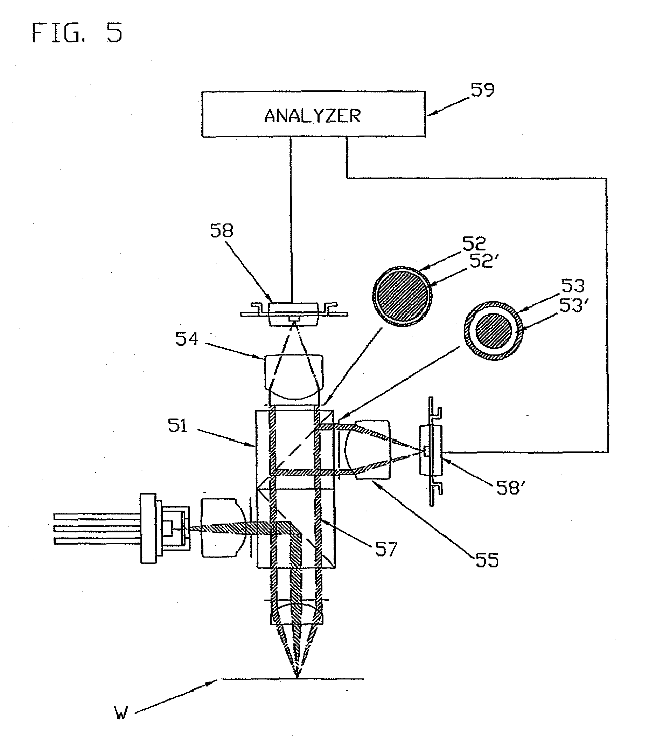

An alternative embodiment of the invention is shown in Figure 3, which is similar in general to the embodiment depicted in Figure 2, except instead of aperture element 25 having a single aperture 25', aperture element 225 is utilized having two apertures, e.g., a round center hole 225' and a concentric annular opening 225", are formed. Annular opening 225" has a same nominal diameter as the hole in ring prism 290 and may have an opening width of, e.g., 0.10 mm. The light source follows the same path as described with reference to Figure 2, but the light reflected and scattered from object surface W is collected by objective lens 26 and collimated toward annular opening 225". Annular beam 27 thus formed goes through beam splitter 24 (or around the small diameter mirror) to ring prism 290. The diameter of annular beam 27 grows or shrinks depending upon the distance to the object surface W. the sensitivity of the measurement can be adjusted by changing the annular opening width of aperture 225". With a narrow opening, the light will quickly shift from a converging annular beam 27 with all light passing through the hole in ring prism 290 to a first bi-cell detector 28 element, to a diverging annular beam 27 with all light striking the prism and being bent toward the second bi-cell detector 28 element. A wider annular opening 225" requires a greater change in distance to object surface W to shift the light from one element to the other in bi-cell detector 28.

It is customary to use aspheric lenses when collimating and focusing laser light, because aspheric lenses reduce longitudinal spherical aberration. For the instant invention, longitudinal spherical aberration of the single spherical surface of a plano-convex objective lens can be used to advantage because the longitudinal spherical aberration causes the maximum and minimum diameter of the cylindrical beam to converge to the nominal image diameter. A thinner ring image results in greater sensitivity to changes in nominal image diameter. This creates an effect similar to increasing the magnification by placing the ring prism farther from the objective lens.

As noted above with regard to Figure 2, because a laser diode is so intense, even a small fraction scattered into detector 28 could be significant. Thus, to improve the performance of the exemplary embodiment, a third apertured element 254 and a fourth apertured element 256, which have annular openings 255 can be placed between beam splitter 24 (or mirror) and ring prism 29. Annular openings 255, which can have opening widths of, e.g., 0.5 mm in apertured elements 254 and 256, allow only the desired cylindrical beam to pass and block any stray light. Further, a spacer 275 can be positioned between apertured elements 254 and 256 to separate these elements by a distance of, e.g., 6 mm, and spacer 275 can be provided with serrated sides to reflect light back towards the source. Such a formed light trap effectively isolates light source 21 from detector 28.

Figure 3 illustrates an alternative embodiment to the exemplary embodiment depicted in Figure 2. However, in the embodiment of Figure 3, a second prism 290', e.g., a wedge-shaped prism, is positioned inside ring prism 290 and oriented in an opposite direction to prism 290. As a result of this configuration, a greater separation of the focused spots can be achieved because each prism 290 and 290' will bend the light passing through in opposite directions and toward the detectors of detector system 38.

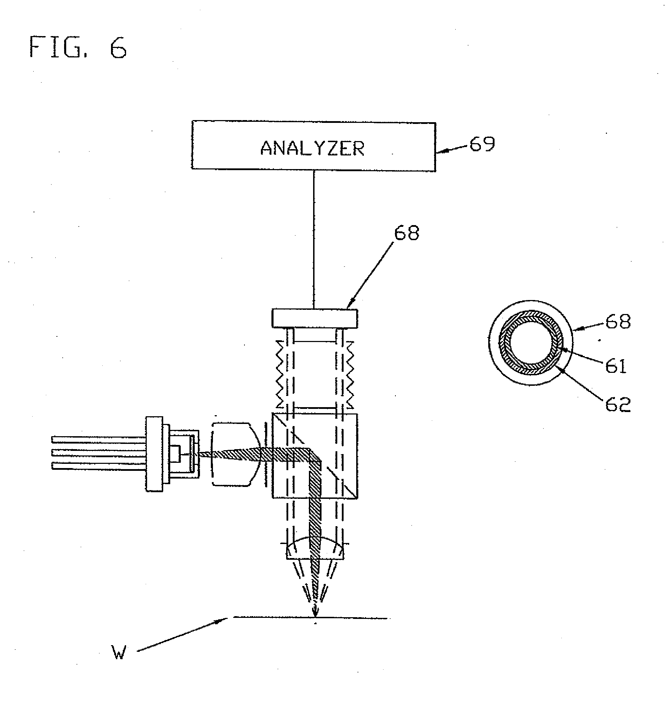

In an alternative embodiment illustrated in Figure 4, ring prism 290 depicted in Figure 2 is replaced with a lens 41, whose diameter is the nominal image diameter, surrounded by a flat window 42. Reflected light falling inside the nominal image diameter is focused directly onto a detector 48, while reflected light falling outside the nominal image diameter continues on a parallel path to a 45° mirror 43, which directs the light through a lens 44 to focus on a second detector 48'. The 45° mirror 43 has a hole 43' in it, which allows the reflected light inside the nominal image diameter, i.e., passing through lens 41, to avoid deflection by mirror 43 so as to be directly focused onto detector 48. According to this arrangement, the two light paths are completely separated so two ordinary single detectors 48 and 48' can be used. Further, an analyzer 49 is coupled to detector system 48 to receive and analyze signals related to the two light paths in order to determine the distance to the object or web.

In another alternative embodiment, which is illustrated in Figure 5, cylindrical parallel beam 57 is split by a second beam splitter 51, e.g., a 45° beam splitter, whereby light traveling straight through splitter 51 goes through an annular aperture 52' of third apertured element 52. An inside diameter of annular aperture 52' is the nominal image diameter, and annular aperture 52' can have an opening width of, e.g., 0.25 mm. A third lens 54 focuses the light passing through annular aperture 52' onto a detector 58. Light reflected 90° by splitter 51 goes through annular aperture 53' of fourth apertured element 53, in which the outside diameter of annular aperture 53' is the nominal image diameter, and annular aperture 53' can have an opening width of, e.g., 0.5 mm. A fourth lens 55 focuses the light passing through annular aperture 53' onto a detector 58'. An advantage of this configuration is that most of the components are conventional. Moreover, an analyzer 59 is coupled to detector systems 58 and 58' to receive and analyze signals from the separate detectors in order to determine the distance to the object or web.

In still another alternative embodiment illustrated in Figure 6, a special detector 68 is utilized. Detector 68 includes two concentric rings 61 and 62 where the split between them is at the nominal image diameter, and analyzer 69 is coupled to detector 68 to receive and analyze signals from concentric rings 61 and 62 in order to determine the distance to the object or web.

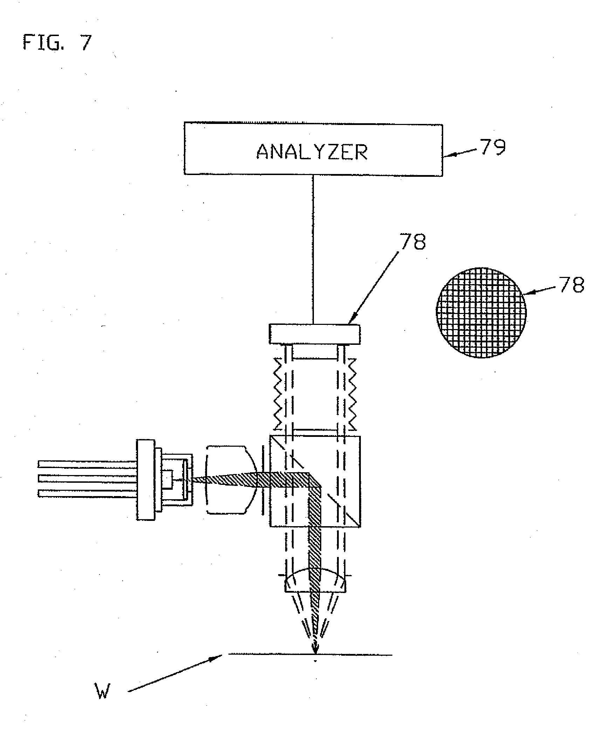

Another alternative embodiment illustrated in Figure 7 employs a special imaging array 78 with software that analyzes the image to determine the diameter of the cylindrical beam. The advantage of this embodiment is that imaging arrays are readily available, such that no special components are required. However, a current disadvantage is that, at this time, known imaging arrays are not fast enough for the application of measuring a fast moving sheet in accordance with the invention. In any event, analyzer 79 is coupled to imaging array 78 in order to receive and analyze the signals from the array in order to determine the distance to the object or web.

It is noted that the embodiments shown above are intended to illustrate various exemplary manners for implementing the features of the present invention. However, it is further noted that these are merely examples and should not be construed as limiting the invention to any particular embodiment. Further, while the optics discussed and depicted use several lenses for collimating and focusing light, it is understood that it is also possible to achieve the same results with different lens configurations and/or materials with no change in the principles of the invention.

While the present invention is directed to measuring distance to an object, such as a web or sheet, the accuracy of the measurement can be improved if the distance being measured is made short and any range of variation of the distance is small. However, while close proximity to the object being measured is desirable, touching it often is not. In this regard, when measuring fine paper moving at high speed, if the sheet is inadvertently contacted, the sheet can be seriously damaged.

Accordingly, in order to maintain close proximity to, without contacting, the object, the device can be mounted on or coupled to an air bearing. Such an air bearing can be created or formed by placing a disc having tiny orifices through which air is injected flat on a surface of the object. Thus, air escaping through the orifices toward the object surface lifts the disc off the surface to a height depending upon the airflow, but typically averaging around 100 micrometers. When the device on or coupled to the air bearing is scanned across the object surface, local variations in the surface contours can be accurately measured as deviations from average air bearing height. Further, the average air bearing height can be stabilized by using the average measured distance to control airflow.

The above-discussed optical systems can be improved with a device for selecting only the light returning from the surface of the sheet and rejecting light that has scattered into the sheet. Such a device utilizes two main features of the optical system:

1. a tightly focused projected light spot from the laser diode; and
2. a high frequency position sensitive detector.

Because there are no moving parts, as in convention confocal microscopes, the instant invention can measure at a very high frequency. In this regard, analyzers 19, 29, 39, 49, 59, 69, and 79 analyze the high frequency components of the detector signals composed of light reflected and scattered from the paper surface and excluding most of the light that is returned from inside the sheet. In this way, the distance to the surface can be measured accurately with high speed facilitating the use of this device for both paper thickness and roughness sensors.

It is noted that the projected light spot can quickly change from being tightly focused at the surface of the sheet to a larger and larger diameter as the light diffuses into the sheet. The tightly focused spot at the surface resolves or identifies small features on the paper such as fibers and fiber clumps, and because the sheet is moving, the image of this spot at the detector will have high frequency components. However, the larger spots from further within the sheet will have only lower frequencies because of the inability of larger spots to resolve small features.

By finding the position of the high frequency component of the spot image, the position of the surface of the paper can be isolated; eliminating error cause by averaging all frequencies, which include components of the image from deeper into the sheet.

Initially, the optics are set up so that light forming the ring image is balanced directly between the two detector elements. If the sheet moves from its nominal distance from the lens or window, the balance shifts to one or the other detector element. In addition to the nominal balance shift, small shifts can also be caused by surface irregularities. The tightly focused spot at the surface of the paper can resolve small-scale irregularities and will result in a rapidly shifting component of the intensity at the detector.

The analyzers analyze the highest frequency component of the signal, which is determined by the resolution of the optics, the scale size of irregularities on the sheet and the sheet speed, a variable of the paper machine. To process the highest frequency component, the signal processing must adapt to the sheet speed. Examples of such signal processing include the following:

1. FFT, fast Fourier transformation, which gives a complete frequency vs. signal amplitude analysis of the signal;
2. Digital filtering using software to filter the signal in order to pass the frequency range of interest. Moreover, the digital filtering can be programmed to adjust the range to track changes in sheet speed; and
3. Analog filters designed to electronically adjust the cut-off frequency to track sheet speed.

It is preferable that the RMS amplitude of the signal from each element over the frequency range of interest be measured using one of the above-noted signal processing methods.

The balance is calculated either as a ratio:

$$BALrms = Arms/Brms$$

or by the equation:

$$BALrms = (Arms - Brms)/(Arms + Brms),$$

where BALrms is the balance of the high frequency components of the signals from the detector elements, Arms is the RMS amplitude of the high frequency component of one element of the detector and Brms is the RMS amplitude of the high frequency component of the other element.

It is noted that the position of the surface of the paper sheet has a nearly linear relationship with BALrms.

Similarly the DC balance is calculated either as a ratio:

$$BALdc=Adc/Bdc$$

or by the equation:

$$BALdc=(Adc-Bdc)/(Adc+Bdc),$$

where the dc subscript means to use the dc signal value in place of the RMS amplitude of the filtered signal.

The dc balance may be needed for very smooth sheets where little high frequency signal is generated.

Another advantage of the instant invention is alignment tolerance. Conventional confocal microscopes require the pinhole to be aligned to a tightly focused spot, and a small misalignment of the pinhole to the focus can cause significant degradation of performance. The present invention aligns detector system to the cylindrically collimated beam before it is focused. Moreover, the larger diameter and area of the light beam allows the alignment tolerance to be relaxed.

It is noted that the foregoing examples have been provided merely for the purpose of explanation and are in no way to be construed as limiting of the present invention. While the present invention has been described with reference to an exemplary embodiment, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular means, materials and embodiments, the present invention is not intended to be limited to the particulars disclosed herein; rather, the present invention extends to all functionally equivalent structures, methods and uses, such as are within the scope of the appended claims.

## Claims

**1.** A device for determining a distance to an object, comprising:

at least one lens arranged to focus light from a source onto the object and to collect light reflected and scattered from the object;
an apertured element comprising a circular aperture structured and arranged to form a circular light beam from the reflected and scattered light;
a detector system structured and arranged to receive the circular light beam, wherein the detector system is sensitive to light beam diameter; and
a determining device structured and arranged to determine a distance to the object based upon signals from the detector system.

**2.** The device in accordance with claim 1, wherein the apertured element comprises an annular aperture structured and arranged to form an annular light beam from the reflected and scattered light; and
the determining device is structured and arranged to receive the annular light beam, wherein the detector system is sensitive to light beam diameter.

**3.** The device in accordance with claim 1, wherein the at least one lens is structured and arranged to collimate the source light to a narrow central beam.

**4.** The device in accordance with claim 1, wherein the at least one lens comprises an aspheric lens structured and arranged to focus the source light onto the object.

**5.** The device in accordance with claim 1, wherein the at least one lens comprises a plano-convex lens structured and arranged to focus the source light onto the object.

**6.** The device in accordance with claim 1, further comprising an element arranged in a path of the cylindrical light beam to allow only the cylindrical beam to pass and to block other light.

**7.** The device in accordance with claim 1, wherein the object is a moving object and the analyzer measures the distance to the object by receiving a high frequency component of the detector system signals to measure an amount of light with high frequency variations reflected and scattered from a surface of the object and passing the annular aperture and directed to the detector system, and analyzing high frequency signals to determine the distance to the surface of a moving object.

**8.** The device in accordance with claim 1, wherein the distance determination in the analyzer is a measure of surface profile.

**9.** The device in accordance with claim 1, wherein the at least one lens comprises at least one lens arrangement positioned on each side of the object; and
the analyzer is further structured and arranged to determine the caliper of the object.

**10.** The device in accordance with claim 9, wherein a separation between the lens arrangements is known, and the caliper is determined in the analyzer by determining the distance to the object from each lens arrangement, and subtracting a sum of the determined distances from a separation of the lens arrangements.

**11.** The device in accordance with claim 9, wherein the object is a moving web.

**12.** The device in accordance with claim 1, further comprising a wedge-shaped ring prism having a hole with a diameter corresponding to the diameter of the cylindrical light beam.

**13.** The device in accordance with claim 12, wherein the ring prism is positioned upstream of the detector system relative to the optical direction so light falling inside the diameter of the hole is directed in one direction while light falling outside the diameter of the hole is bent by the prism in another direction.

**14.** The device in accordance with claim 13, wherein the detector system comprises at least two detectors arranged to receive the light directed in the one direction and to receive the light bent in the another direction.

**15.** The device in accordance with claim 12, wherein another wedge-shaped prism is arranged in the hole of the wedge-shaped ring prism.

**16.** The device in accordance with claim 15, wherein the wedge-shaped prisms are arranged upstream of the detector system relative to the optical direction so that light falling inside the diameter of the hole is bent by the inside prism in one direction while light falling outside the diameter of the hole is bent by the outside prism in another direction.

**17.** The device in accordance with claim 1, further comprising:

a flat window with a hole and a lens arranged in the hole, so that light falling inside the diameter of the hole is focused by the lens in one direction; and
a mirror arranged downstream of the flat window and lens to direct light falling outside the diameter of the hole, which passes through the flat window, in another direction.

**18.** The device in accordance with claim 1, further comprising:

a beam splitter arranged to split the cylindrical light;
a second apertured element having an annular aperture having an inner diameter corresponding to the diameter of the cylindrical light; and
a third apertured element having an annular aperture having an outer diameter corresponding to the diameter of the cylindrical light,

wherein a first split portion of the split cylindrical light is directed through the second apertured element so that an increasing amount of light will pass to a detector of the detector system as the cylindrical beam diameter increases, and
wherein a second split portion of the split cylindrical light is directed through the third apertured element so that an increasing amount of light will pass to another detector of the detector system as the cylindrical beam diameter decreases.

**19.** The device in accordance with claim 1, wherein the detector comprises concentric detectors.

**20.** The device in accordance with claim 1, wherein the detector comprises a detector array.

**21.** The device in accordance with claim 1, wherein the detector comprises an imaging array.

**22.** The device in accordance with claim 1, wherein the light source comprises a laser diode.

**23.** A process for determining a distance to an object, comprising:

focusing light from a source onto the object and collecting light reflected and scattered from the object through a same at least one lens;
forming a cylindrical light beam from the reflected and scattered light;
monitoring the diameter of the cylindrical light beam; and
determining a distance to the object based upon signals related to the monitored diameter of the cylindrical light beam.

**24.** The process in accordance with claim 23, further comprising collimating the source light to a narrow central beam.

**25.** The process in accordance with claim 23, further comprising allowing the cylindrical light beam to pass while blocking other light.

**26.** The process in accordance with claim 23, wherein the determining of the distance comprises:

receiving a high frequency component of the detector system signals to measure an amount of light with high frequency variations reflected and scattered from a surface of the object and passing the annular aperture and directed to the detector system; and
analyzing high frequency signals to determine the distance to the surface of a moving object.

**27.** The process in accordance with claim 23, further comprising measuring a surface profile of the object.

**28.** The process in accordance with claim 23, further comprising determining the caliper of the object.

**29.** The process in accordance with claim 28, wherein a separation between the lens arrangements is known, and the determining the caliper comprises determining the distance to the object from each lens arrangement, and subtracting a sum of the determined distances from a separation of the lens arrangements.

**30.** The process in accordance with claim 28, wherein the object is a moving web.

**31.** The process in accordance with claim 23, further comprising:

directing the cylindrical light beam through a wedge-shaped ring prism having a hole with a diameter corresponding to the diameter of the cylindrical light beam;
directing light falling inside the diameter of the hole in one direction; and
bending light falling outside the diameter of the hole in another direction.

**32.** The process in accordance with claim 23, further comprising:

directing the cylindrical light beam through a wedge-shaped ring prism having a hole with a diameter corresponding to the diameter of the cylindrical light beam with another wedge-shaped prism arranged in the hole;
bending light falling inside the diameter of the hole in one direction; and
bending light falling outside the diameter of the hole in another direction.

**33.** The device in accordance with claim 23, further comprising:

directing the cylindrical light beam through a flat window with a hole and a lens arranged in the hole;
focusing light falling inside the diameter of the hole in one direction; and
directing light falling outside the diameter of the hole, which passes through the flat window, in another direction.

**34.** The device in accordance with claim 23, further comprising:

splitting the cylindrical light;
directing a first split portion of the split cylindrical light through the second apertured element so that an increasing amount of light will pass to a detector of the detector system as the cylindrical beam diameter increases; and
directing a second split portion of the split cylindrical light through the third apertured element so that an increasing amount of light will pass to another detector of the detector system as the cylindrical beam diameter decreases.

FIG. 1
ANALYZER
19
DETECTOR SYSTEM
18
P2
P1
P3
17
13'
13
14
15
15
15'
11
12
S
16
W2
W1
W3
W

FIG. 2
ANALYZER
29
28
291
290
256
275
254
23'
23
24
21
22
27
25
26
25'
256
254
255
W

FIG. 3

ANALYZER
29
28
291
290'
290
256
275
254
23'
23
24
21
22
27
225
26
W
256
254
255
225"
225'

FIG. 4

ANALYZER
49
48
43
43'
48'
44
42
41
W

FIG. 5

ANALYZER
59
58
52
52'
53
53'
54
51
58'
57
55
W

FIG. 6

ANALYZER
69
68
68
61
62
W

FIG. 7

ANALYZER
79
78
78
W

European Patent Office

# EUROPEAN SEARCH REPORT

Application Number
EP 07 10 8009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 534 288 A (TESA SA [CH]) 31 March 1993 (1993-03-31) * column 4, line 37 - column 7, line 17 * * column 8, line 54 - column 9, line 3 * * abstract; figures 1-7,10,12 * | 1-34 | INV. G01B11/02 G01B11/30 G01B11/06 G02B21/00 |
| X<br>A | US 6 031 661 A (TANAAMI TAKEO [JP]) 29 February 2000 (2000-02-29) * column 2, line 45 - column 4, line 3 * * column 4, line 40 - line 53 * * abstract; figures 3,4,5B * | 1-22<br>23-34 | |
| A | DE 28 18 651 A1 (NAT RES DEV) 2 November 1978 (1978-11-02) * page 5, last paragraph - page 10, paragraph 1 * * figures 1-5 * | 1-34 | |
| A | US 4 844 617 A (KELDERMAN HERMAN F [US] ET AL) 4 July 1989 (1989-07-04) * column 2, line 27 - column 4, line 21 * * figures 1-6 * | 1-34 | TECHNICAL FIELDS SEARCHED (IPC)<br>G01B<br>G02B |

The present search report has been drawn up for all claims

| Place of search | Date of completion of the search | Examiner |
|---|---|---|
| The Hague | 6 June 2007 | Passier, Martinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01) 4

## ANNEX TO THE EUROPEAN SEARCH REPORT ON EUROPEAN PATENT APPLICATION NO. EP 07 10 8009

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2007

| Patent document cited in search report | Publication date | Patent family member(s) | Publication date |
|---|---|---|---|
| EP 0534288 A | 31-03-1993 | JP 5203418 A | 10-08-1993 |
| US 6031661 A | 29-02-2000 | GB 2321517 A | 29-07-1998 |
| | | JP 3438855 B2 | 18-08-2003 |
| | | JP 10206740 A | 07-08-1998 |
| DE 2818651 A1 | 02-11-1978 | GB 1595422 A | 12-08-1981 |
| | | US 4198571 A | 15-04-1980 |
| US 4844617 A | 04-07-1989 | NONE | |

EPO FORM P0459

For more details about this annex : see Official Journal of the European Patent Office, No. 12/82